# EUROPEAN PATENT APPLICATION

(11) **EP 4 568 050 A2**
(43) Date of publication of application: **11.06.2025**
(21) Application number: 24215636.2
(22) Date of filing: 27.11.2024
(51) Int. Cl.: H02J 3/32, H02H 7/18, H02J 3/38, H02J 7/00

(54) **ENERGY STORAGE SYSTEM AND PHOTOVOLTAIC ENERGY STORAGE SYSTEM**

(30) Priority: 04.12.2023 CN 202311648277
(71) Applicant: Huawei Digital Power Technologies Co., Ltd., Shenzhen, Guangdong 518043 (CN)
(72) Inventor: QIN, Zhendong, Shenzhen, 518043 (CN)
(74) Representative: Gill Jennings & Every LLP

(57) **Abstract**

This application provides an energy storage system and a photovoltaic energy storage system. The energy storage system includes a first auxiliary power supply, a battery pack, and a current-limiting protection circuit. The first auxiliary power supply is configured to supply power to a second auxiliary power supply in the battery pack, the second auxiliary power supply is configured to supply power to a power board in the battery pack, and the second auxiliary power supply and the current-limiting protection circuit are connected in series and then connected in parallel to two ends of the first auxiliary power supply. The current-limiting protection circuit includes a drive circuit, a first switching transistor, and a first resistor, one end of the first switching transistor and the first resistor that are connected in series is connected to the first auxiliary power supply, the other end of the first switching transistor and the first resistor that are connected in series is connected to the second auxiliary power supply, and the drive circuit is connected to the first auxiliary power supply through the first switching transistor and the first resistor; and when a drive voltage is greater than a turn-on voltage of the first switching transistor, the first switching transistor is turned on, and the drive voltage is a difference between an output voltage of the drive circuit and a voltage between two ends of the first resistor. In the solution provided in this application, a short-circuit current in a loop can be cut off, a risk of short-circuit fault spreading can be reduced, and costs can also be reduced.

## Description

### TECHNICAL FIELD

This application relates to the device protection field, and in particular, to an energy storage system and a photovoltaic energy storage system.

### BACKGROUND

A battery control unit (battery control unit, BCU) in an energy storage system includes a BCU-auxiliary power supply board and a BCU-monitoring board, and a battery pack includes a power board and a battery cell. A first auxiliary power supply in the BCU-auxiliary power supply board may be configured to supply power to a second auxiliary power supply in the battery pack.

Currently, a technical solution for short-circuit protection of the auxiliary power supply is mainly implemented through a main power transistor and a sampling control circuit. The sampling control circuit determines, based on a collected voltage between two ends of a sampling resistor, whether to turn off the main power transistor. However, in this solution, the sampling control circuit includes a large quantity of circuits, for example, a sampling circuit, a comparison circuit, and a micro control unit (micro control unit, MCU), and costs are high.

### SUMMARY

This application provides an energy storage system and a photovoltaic energy storage system, so that a short-circuit current in a loop can be cut off, a risk of short-circuit fault spreading can be reduced, and costs can also be reduced.

According to a first aspect, an energy storage system is provided. The energy storage system includes a first auxiliary power supply, a battery pack, and a current-limiting protection circuit, where the first auxiliary power supply is configured to supply power to a second auxiliary power supply in the battery pack; the second auxiliary power supply is configured to supply power to a power board in the battery pack; the power board is configured to monitor a battery cell in the battery pack, or the power board is configured to change a charging voltage and a discharging voltage of a battery cell, or the power board is configured to collect a charging voltage and a discharging voltage of a battery cell; and the second auxiliary power supply and the current-limiting protection circuit are connected in series and then connected in parallel to two ends of the first auxiliary power supply. The current-limiting protection circuit includes a drive circuit, a first switching transistor, and a first resistor, one end of the first switching transistor and the first resistor that are connected in series is connected to the first auxiliary power supply, the other end of the first switching transistor and the first resistor that are connected in series is connected to the second auxiliary power supply, and the drive circuit is connected to the first auxiliary power supply through the first switching transistor and the first resistor; and when a drive voltage is greater than a turn-on voltage of the first switching transistor, the first switching transistor is turned on, and the drive voltage is a difference between an output voltage of the drive circuit and a voltage between two ends of the first resistor.

In this embodiment of this application, when the second auxiliary power supply is short-circuited, an increase in a current of a loop in which the first auxiliary power supply supplies power to the second auxiliary power supply causes an increase in the voltage between the two ends of the first resistor. Because the drive voltage is the difference between the output voltage of the drive circuit and the voltage between the two ends of the first resistor, the drive voltage of the first switching transistor decreases, and the first switching transistor is turned off, so that the short-circuit current in the loop can be cut off, thereby reducing a risk of short-circuit fault spreading. In addition, the current-limiting protection circuit in this embodiment of this application includes only the drive circuit, the first switching transistor, and the first resistor. Protection can be implemented through the current-limiting protection circuit. In comparison with an existing solution in which a sampling circuit, a comparison circuit, and an MCU need to be designed, the current-limiting protection circuit in this embodiment of this application is simple in design, there is a small quantity of components, and costs and complexity can be reduced.

With reference to the first aspect, in a possible implementation, a base of the first switching transistor is connected to the drive circuit, an emitter of the first switching transistor is connected to the first resistor, and a collector of the first switching transistor is connected to the second auxiliary power supply.

In this embodiment of this application, the drive circuit is connected to the base of the first switching transistor, the emitter of the first switching transistor is connected to the first resistor, and the voltage output by the drive circuit is a sum of the voltage between the two ends of the first resistor and a voltage between the base and the emitter of the first switching transistor. If the second auxiliary power supply is short-circuited, a current flowing through the first resistor increases, the voltage between the two ends of the first resistor increases, and the voltage between the base and the emitter of the first switching transistor decreases. When the voltage between the base and the emitter of the first switching transistor is less than the turn-on voltage of the first switching transistor, the first switching transistor is turned off, so that the short-circuit current in the loop can be cut off, thereby reducing a risk of short-circuit fault spreading.

With reference to the first aspect, in a possible implementation, a second resistor is connected in series between the drive circuit and the base of the first switching transistor.

In this embodiment of this application, because the second resistor is connected in series between the drive circuit and the base of the first switching transistor, a part of a voltage corresponding to a high-level signal output by the drive circuit is borne by the second resistor, so that the voltage between the base and the emitter of the first switching transistor can be reduced, a risk that the voltage applied between the base and the emitter of the first switching transistor exceeds a limit voltage of the first switching transistor can be reduced, and damage to the first switching transistor can be avoided.

With reference to the first aspect, in a possible implementation, after the first switching transistor and the first resistor are connected in series, the first switching transistor and the first resistor are connected in parallel to two ends of a third resistor, and one end of the third resistor is connected to the base of the first switching transistor. A first Zener diode is further connected in parallel to the two ends of the third resistor, and a cathode of the first Zener diode is connected to the base of the first switching transistor.

In this embodiment of this application, the two ends of the third resistor are connected in parallel to the first Zener diode, and the cathode of the first Zener diode is connected to the drive circuit, which is equivalent to that the cathode of the first Zener diode is connected to the drive circuit. When the voltage corresponding to the high-level signal output by the drive circuit is large, the voltage may break through the first Zener diode. When the first Zener diode is broken through, the voltage between the two ends of the first Zener diode is a stable voltage value, and the stable voltage value is equivalent to the sum of the voltage of the first switching transistor and the voltage between the two ends of the first resistor. Even if the voltage value corresponding to the high-level signal output by the drive circuit fluctuates, or a voltage at each point in the circuit changes due to another reason, the voltage between the two ends of the first Zener diode is always a stable voltage value, that is, the sum of the voltage of the first switching transistor and the voltage between the two ends of the first resistor is a stable value. Therefore, the voltage between the base and the emitter of the first switching transistor is a stable value, so that a turn-on state of the first switching transistor can be stabilized, and then the first auxiliary power supply may continuously supply power to the second auxiliary power supply in the battery pack.

With reference to the first aspect, in a possible implementation, the current-limiting protection circuit further includes a self-locking circuit, the self-locking circuit is connected in parallel to the second auxiliary power supply, a first end of the self-locking circuit is connected to the first auxiliary power supply, a second end of the self-locking circuit is connected to the collector of the first switching transistor, and a third end of the self-locking circuit is connected to the base of the first switching transistor. When the first switching transistor is turned on, the drive voltage is greater than the turn-on voltage of the first switching transistor.

In this embodiment of this application, a drive signal is designed as a pulse signal, and the pulse signal output by the drive circuit periodically attempts to drive the first switching transistor to be turned on. After a short-circuit fault is rectified, the first switching transistor can be automatically turned on without manual intervention, so that self-control of the energy storage system can be improved. If the drive signal is designed as the pulse signal, the first switching transistor is periodically turned on and off. However, the self-locking circuit may maintain the turn-on state of the first switching transistor when the first switching transistor is turned on, so that the first auxiliary power supply can continuously supply power to the second auxiliary power supply in the battery pack. In addition, if the second auxiliary power supply is short-circuited, the voltage between the two ends of the first resistor increases, and the drive voltage of the first switching transistor decreases, so that the first switching transistor is turned off, and the short-circuit current can be cut off, thereby reducing the risk of short-circuit fault spreading.

With reference to the first aspect, in a possible implementation, the self-locking circuit includes a second Zener diode, a fourth resistor, and a second switching transistor. The fourth resistor and the second Zener diode are connected in series and then connected in parallel to the second auxiliary power supply, a cathode of the second Zener diode is connected to the fourth resistor, an anode of the second Zener diode is connected to the second auxiliary power supply, an emitter of the second switching transistor is connected to the first auxiliary power supply, a collector of the second switching transistor is connected to the base of the first switching transistor, and a base of the second switching transistor is connected to the cathode of the second Zener diode.

The self-locking circuit in this embodiment of this application includes the second Zener diode, the fourth resistor, and the second switching transistor. When the first switching transistor is turned on, the loop in which the first auxiliary power supply supplies power to the second auxiliary power supply in the battery pack is turned on, and the voltage between the two ends of the second auxiliary power supply is equal to a voltage obtained after the fourth resistor is connected in series to the second Zener diode. When the first auxiliary power supply supplies power to the second auxiliary power supply in the battery pack, the first auxiliary power supply may break through the second Zener diode, so that the voltage of the second Zener diode is a stable voltage value. Therefore, a voltage value at two ends of the fourth resistor is stable. The two ends of the fourth resistor are respectively connected to the base and the emitter of the second switching transistor, that is, a base voltage of the second switching transistor is always greater than an emitter voltage of the second switching transistor. Therefore, the second switching transistor is always in a turn-on state. Because the emitter of the second switching transistor is connected to the first auxiliary power supply, and the collector of the second switching transistor is connected to the base of the first switching transistor, a base voltage of the first switching transistor is always greater than an emitter voltage of the first switching transistor, so that the turn-on state of the first switching transistor can be maintained.

With reference to the first aspect, in a possible implementation, the self-locking circuit further includes a fifth resistor, the fifth resistor is connected in series between the fourth resistor and the second Zener diode, one end of the fifth resistor is connected to the base of the second switching transistor, and the other end of the fifth resistor is connected to the cathode of the second Zener diode.

In this embodiment of this application, the self-locking circuit further includes the fifth resistor, the fifth resistor is connected in series between the fourth resistor and the second Zener diode, one end of the fifth resistor is connected to the base of the second switching transistor, and the other end of the fifth resistor is connected to the cathode of the second Zener diode. The fifth resistor may bear a part of the voltage output by the first auxiliary power supply. Therefore, a limitation on selection of the second Zener diode is reduced, that is, a Zener diode with a small Zener voltage value may be selected.

With reference to the first aspect, in a possible implementation, the self-locking circuit further includes a sixth resistor, one end of the sixth resistor is connected to the collector of the second switching transistor, and the other end of the sixth resistor is connected to the base of the first switching transistor.

In this embodiment of this application, the self-locking circuit further includes the sixth resistor, one end of the sixth resistor is connected to the collector of the second switching transistor, and the other end of the sixth resistor is connected to the base of the first switching transistor. Because the first auxiliary power supply is connected to the base of the first switching transistor through the second switching transistor and the sixth resistor, the sixth resistor may bear a part of the voltage output by the auxiliary power supply, so that the base voltage of the first switching transistor can be reduced, and a risk of damage to the first switching transistor can be reduced, thereby prolonging a service life of the first switching transistor.

With reference to the first aspect, in a possible implementation, the current-limiting protection circuit further includes a temperature detection circuit, the temperature detection circuit includes a temperature-sensitive resistor circuit and a third switching transistor, a base of the third switching transistor is connected to the temperature-sensitive resistor circuit, an emitter of the third switching transistor is connected in series to the emitter of the first switching transistor, and a collector of the third switching transistor is connected to the base of the first switching transistor. When a temperature of the first switching transistor is greater than a temperature threshold, the third switching transistor is turned on, and the first switching transistor is turned off.

In this embodiment of this application, when the temperature of the first switching transistor is greater than the temperature threshold, the temperature detection circuit may turn on the third switching transistor, to enable the first switching transistor to be turned off, so that damage to the first switching transistor caused by an excessively high temperature can be avoided, thereby protecting the first switching transistor, and prolonging a service life of the first switching transistor.

With reference to the first aspect, in a possible implementation, the temperature-sensitive resistor circuit includes a temperature-sensitive resistor, a seventh resistor, an eighth resistor, and a third Zener diode, and a resistance value of the temperature-sensitive resistor decreases as the temperature of the first switching transistor increases. The temperature-sensitive resistor and the seventh resistor are connected in series and then connected to the emitter of the third switching transistor, the third Zener diode and the eighth resistor are connected in series and then connected in parallel to two ends of the seventh resistor, and a connection point between the third Zener diode and the eighth resistor is connected to the base of the third switching transistor.

In this embodiment of this application, the resistance value of the temperature-sensitive resistor decreases as the temperature increases. When the temperature of the first switching transistor is greater than the temperature threshold, a decrease in the resistance value of the temperature-sensitive resistor causes a decrease in a voltage between two ends of the temperature-sensitive resistor, and a voltage between the two ends of the seventh resistor increases. After the third Zener diode and the eighth resistor are connected in series, the third Zener diode and the eighth resistor are connected in parallel to the two ends of the seventh resistor. Therefore, the voltage between the two ends of the seventh resistor is a voltage obtained after the third Zener diode and the eighth resistor are connected in series. An increase in the voltage between the two ends of the seventh resistor is equivalent to an increase in the voltage obtained after the third Zener diode and the eighth resistor are connected in series. Consequently, the third Zener diode may be broken through. After the third Zener diode is broken through, the voltage between the two ends of the third Zener diode is a stable voltage value. Because an anode of the third Zener diode is connected to the base of the third switching transistor, the third switching transistor is turned on. In addition, because the collector of the third switching transistor is connected to the base of the first switching transistor, and the emitter of the third switching transistor is connected to a negative electrode of the first auxiliary power supply, it is equivalent to that the base of the first switching transistor is connected to the negative electrode of the first auxiliary power supply. In addition, because the emitter of the first switching transistor is also connected to the negative electrode of the first auxiliary power supply, the base voltage of the first switching transistor is consistent with the emitter voltage of the first switching transistor, so that the first switching transistor can be turned off. Therefore, damage to the first switching transistor caused by an excessively high temperature can be avoided, thereby protecting the first switching transistor, and prolonging a service life of the first switching transistor.

With reference to the first aspect, in a possible implementation, the self-locking circuit further includes a capacitor, the capacitor is connected in parallel to two ends of the fourth resistor, and the capacitor is configured to filter out a clutter of the first auxiliary power supply.

According to a second aspect, a photovoltaic energy storage system is provided. The photovoltaic energy storage system includes a power converter and the energy storage system according to any implementation of the first aspect, a direct current input end of the power converter is configured to be connected to a photovoltaic module, an alternating current output end of the power converter is configured to be connected to a load, the power converter includes a direct current conversion circuit and an inverter circuit that are connected in series, and a series connection point between the direct current conversion circuit and the inverter circuit is connected to the first auxiliary power supply of the energy storage system.

For technical effects that can be achieved in any implementation of the second aspect, refer to descriptions of technical effects that can be achieved in any possible implementation of the first aspect. Details are not repeatedly described herein again.

### BRIEF DESCRIPTION OF DRAWINGS

FIG. 1 is a diagram of a scenario applicable to this application;
FIG. 2 is a diagram of an energy storage system;
FIG. 3 is a diagram of overcurrent protection of an energy storage system;
FIG. 4 is a diagram of an energy storage system according to an embodiment of this application;
FIG. 5 is a diagram of another energy storage system according to an embodiment of this application;
FIG. 6 is a diagram of still another energy storage system according to an embodiment of this application;
FIG. 7 is a diagram of yet another energy storage system according to an embodiment of this application;
FIG. 8 is a diagram of yet another energy storage system according to an embodiment of this application;
FIG. 9 is a diagram of yet another energy storage system according to an embodiment of this application;
FIG. 10 is a diagram of yet another energy storage system according to an embodiment of this application;
FIG. 11 is a diagram of yet another energy storage system according to an embodiment of this application;
FIG. 12 is a diagram of yet another energy storage system according to an embodiment of this application; and
FIG. 13 is a diagram of yet another energy storage system according to an embodiment of this application.

### DESCRIPTION OF EMBODIMENTS

The following describes technical solutions of this application with reference to accompanying drawings.

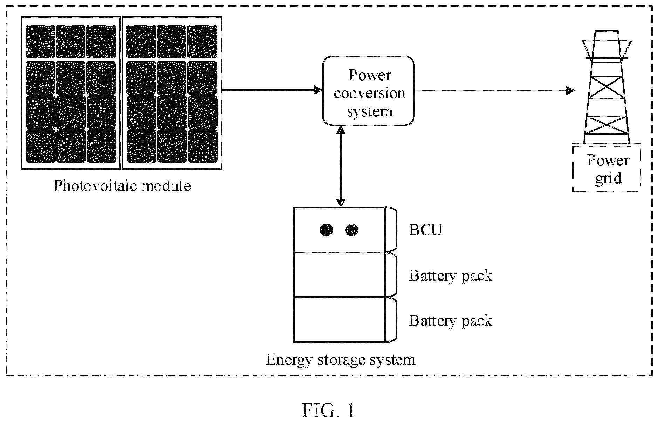

FIG. 1 is a diagram of a scenario applicable to this application. Refer to FIG. 1. A photovoltaic module converts solar energy into a direct current through a photovoltaic effect. A power conversion system converts the direct current from the photovoltaic module into an alternating current, and then outputs the alternating current to a power grid. Alternatively, a power conversion system may convert a direct current from an energy storage system into an alternating current, and then output the alternating current to a power grid. Alternatively, a power conversion system may convert an alternating current from a power grid into a direct current, and then charge an energy storage system. The energy storage system includes a BCU and a battery pack.

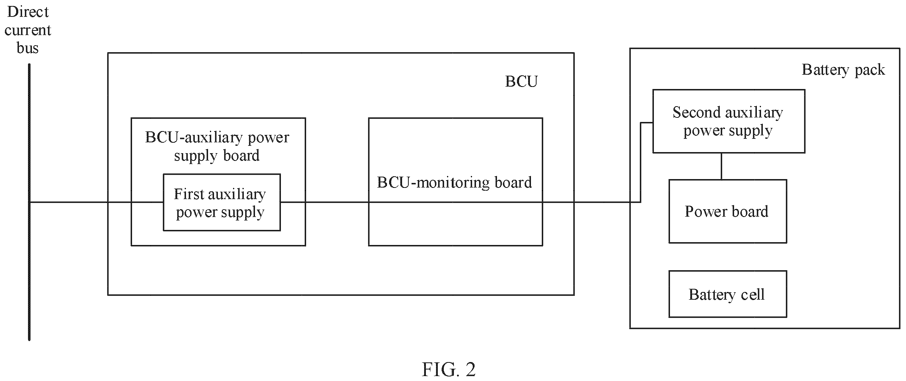

FIG. 2 is a diagram of an energy storage system. A BCU includes a BCU-auxiliary power supply board and a BCU-monitoring board. The BCU-auxiliary power supply board includes a first auxiliary power supply. A battery pack includes a second auxiliary power supply, a power board, and a battery cell. One end of the first auxiliary power supply is configured to be connected to a direct current bus of a power conversion system, and the other end of the first auxiliary power supply is connected to the power board through the second auxiliary power supply. When the direct current bus of the power conversion system is powered on, the first auxiliary power supply obtains power from the direct current bus to supply power to the second auxiliary power supply, and the second auxiliary power supply further provides a direct current with an appropriate voltage for the power board through voltage conversion. It should be noted that, in addition to the first auxiliary power supply, the BCU-auxiliary power supply board may further include another auxiliary power supply (not shown). The another auxiliary power supply may supply power to the BCU-monitoring board, and may also provide some electric energy for the second auxiliary power supply. In addition, the power board includes a plurality of modules, for example, a sampling module, a monitoring module, and a power conversion module. The sampling module is configured to collect current, voltage, or temperature information of the battery cell in a charging/discharging process. The monitoring module is configured to transmit information about the battery cell to the BCU. The power conversion module is configured to change a charging voltage or a discharging voltage of the battery cell.

In an actual application scenario, because the first auxiliary power supply is disposed in the BCU and the second auxiliary power supply is disposed in the battery pack, the first auxiliary power supply needs to supply power to the second auxiliary power supply in a cross-device manner, and the first auxiliary power supply is an increase in a power supply path of the second auxiliary power supply. Further, because the first auxiliary power supply is the increase in the power supply path of the second auxiliary power supply, a probability that a short-circuit fault occurs on the second auxiliary power supply is greatly increased. When the short-circuit fault occurs on the second auxiliary power supply, shutdown protection of the energy storage system is triggered. As a result, the energy storage system cannot guide a customer to perform targeted maintenance through an alarm. In a serious case, sudden shutdown of the energy storage system may even cause an abnormal action of a power conversion circuit in the energy storage system, and cause the short-circuit fault to spread. Therefore, when the short-circuit fault occurs on the second auxiliary power supply, it is critical to identify and rectify the short-circuit fault in a timely manner to ensure safety and reliability of the energy storage system.

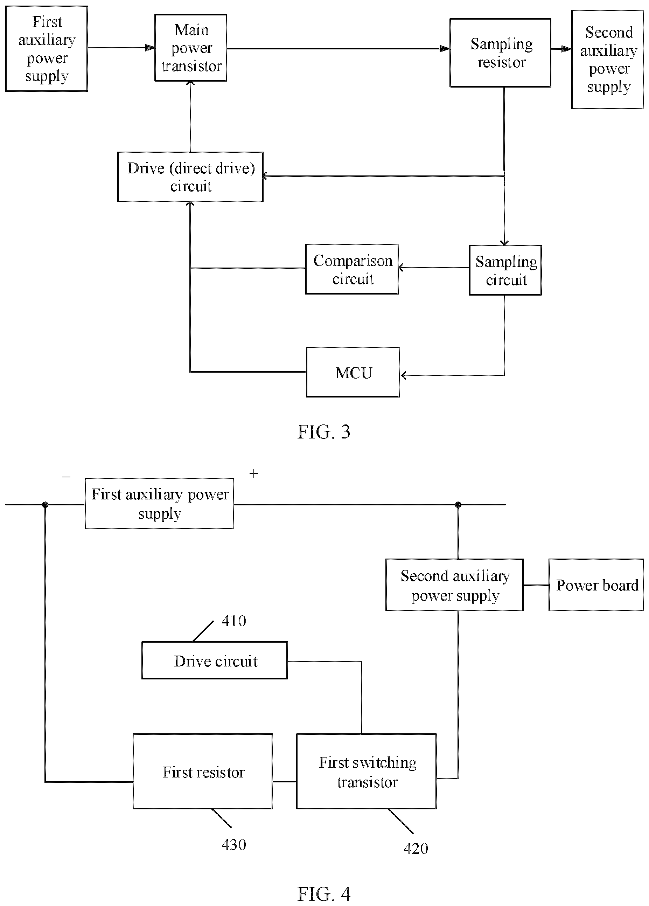

As shown in FIG. 3, to rectify the short-circuit fault on the second auxiliary power supply in a timely manner, in a prior-art solution, a sampling resistor is disposed on a connection line between the first auxiliary power supply and the second auxiliary power supply. When the short-circuit fault occurs on the second auxiliary power supply, a current flowing through the sampling resistor increases, and a voltage between two ends of the sampling resistor increases. Further, a sampling circuit transmits a signal of the voltage between the two ends of the sampling resistor to an MCU or a comparison circuit for comparison and determining, to trigger a drive circuit to turn off a main power transistor to disconnect a short-circuit loop. However, in this solution, because the sampling circuit, the comparison circuit, and the MCU are related, costs are high.

Based on this, this application provides the energy storage system, so that a short-circuit current in the loop when the second auxiliary power supply is short-circuited can be cut off, there is a small quantity of components in the energy storage system, and costs are reduced.

FIG. 4 is a diagram of an energy storage system according to an embodiment of this application. The energy storage system includes a first auxiliary power supply, a battery pack, and a current-limiting protection circuit. The first auxiliary power supply is configured to supply power to a second auxiliary power supply in the battery pack, the second auxiliary power supply is configured to supply power to a power board in the battery pack, and the second auxiliary power supply and the current-limiting protection circuit are connected in series and then connected in parallel to two ends of the first auxiliary power supply. The current-limiting protection circuit includes a drive circuit 410, a first switching transistor 420, and a first resistor 430, one end of the first switching transistor 420 and the first resistor 430 that are connected in series is connected to the first auxiliary power supply, the other end of the first switching transistor 420 and the first resistor 430 that are connected in series is connected to the second auxiliary power supply, and the drive circuit 410 is connected to the first auxiliary power supply V1 through the first switching transistor 420 and the first resistor 430; and when a drive voltage is greater than a turn-on voltage of the first switching transistor 420, the first switching transistor 420 is turned on, and the drive voltage is a difference between an output voltage of the drive circuit 410 and a voltage between two ends of the first resistor 430.

The first switching transistor 420 in this embodiment of this application may be specifically a triode or a metal-oxide semiconductor field-effect transistor (metal-oxide-semiconductor field-effect transistor, MOSFET), or may be an insulated gate bipolar transistor (insulated gate bipolar transistor, IGBT), a gallium nitride (gallium nitride, GaN) high electron mobility transistor (high electron mobility transistor, HEMT), or the like. For ease of description, an example in which the first switching transistor is a triode is used below.

The first resistor 430 in this embodiment of this application may be one resistor, or may include a plurality of resistors connected in series. This is not limited.

A specific protection process of the energy storage system in this embodiment of this application is as follows: In a normal case, the first switching transistor 420 is turned on, and a loop in which the first auxiliary power supply supplies power to the second auxiliary power supply in the battery pack is turned on, so that the second auxiliary power supply can successfully supply power to the power board in the battery pack. When the second auxiliary power supply is short-circuited, an increase in a current of the loop in which the first auxiliary power supply supplies power to the second auxiliary power supply causes an increase in the voltage between the two ends of the first resistor 430. In this embodiment of this application, the drive voltage is the difference between the output voltage of the drive circuit 410 and the voltage between the two ends of the first resistor 430. The increase in the voltage between the two ends of the first resistor 430 causes a decrease in the drive voltage of the first switching transistor 420; and when the drive voltage of the first switching transistor 420 is less than the turn-on voltage of the first switching transistor 420, the first switching transistor 420 is turned off, so that a short-circuit current in the loop can be cut off, thereby reducing a risk of short-circuit fault spreading.

In addition, the current-limiting protection circuit in this embodiment of this application includes only the drive circuit 410, the first switching transistor 420, and the first resistor 430. Protection can be implemented through the current-limiting protection circuit. In comparison with an existing solution in which a sampling circuit, a comparison circuit, and an MCU need to be designed, the current-limiting protection circuit in this embodiment of this application is simple in design, there is a small quantity of components, and costs and complexity can be reduced.

It should be further noted that the output voltage of the drive circuit 410 in this embodiment of this application is a constant value. When the voltage between the two ends of the first resistor 430 increases, the drive voltage of the first switching transistor 420 decreases, and then the first switching transistor 420 is turned off. In some possible embodiments, the voltage output by the drive circuit 410 may not be a constant value. In this case, to implement the solution of this application, a corresponding Zener diode may be disposed, to enable a sum of the drive voltage and the voltage between the two ends of the first resistor 430 to be a constant value. For specific content, refer to descriptions below.

The following specifically describes the solution in this embodiment of this application by using an example in which the first switching transistor is a triode.

In an embodiment, a base b of the first switching transistor 420 is connected to the drive circuit 410, an emitter e of the first switching transistor 420 is connected to the first resistor R1, and a collector c of the first switching transistor 420 is connected to the second auxiliary power supply.

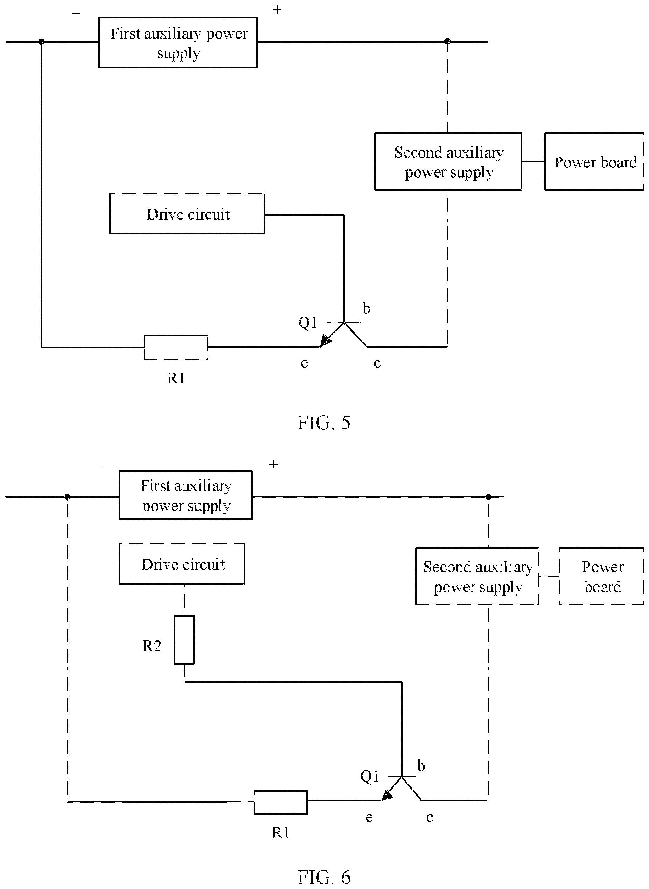

FIG. 5 is a diagram of another energy storage system according to an embodiment of this application. In this embodiment of this application, a voltage corresponding to a drive signal output by a drive circuit is small, and a manner in which a first switching transistor Q1 is turned on is as follows: Because an emitter of the first switching transistor Q1 is connected to a negative electrode of a first auxiliary power supply, and a base of Q1 is connected to the drive circuit, when the drive circuit outputs a high-level signal, a base voltage of Q1 is greater than an emitter voltage of Q1; and when a difference between the base voltage of Q1 and the emitter voltage of Q1 is greater than a turn-on voltage of Q1, the first switching transistor Q1 is turned on, that is, a loop in which the first auxiliary power supply supplies power to a second auxiliary power supply in a battery pack is turned on, so that the first auxiliary power supply successfully supplies power to the second auxiliary power supply.

An example in which the turn-on voltage of the first switching transistor Q1 is 3.4 V is used. If a voltage corresponding to the high-level signal output by the drive circuit is 5 V, the voltage is greater than the turn-on voltage of the first switching transistor Q1, so that the first switching transistor Q1 is turned on.

When the first switching transistor Q1 is turned on, the voltage output by the drive circuit is a sum of a voltage between two ends of the first resistor R1 and a voltage between the base and the emitter of the first switching transistor Q1. If the second auxiliary power supply is short-circuited, a current flowing through the first resistor R1 increases, the voltage between the two ends of the first resistor R1 increases, and the drive voltage between the base and the emitter of the first switching transistor Q1 decreases. When the voltage between the base and the emitter of the first switching transistor Q1 is less than the turn-on voltage of the first switching transistor Q1, the first switching transistor Q1 is turned off, so that a short-circuit current in the loop can be cut off, thereby reducing a risk of short-circuit fault spreading.

Usually, because the drive circuit also needs to obtain power from a BCU-auxiliary power supply board, when a voltage provided by the auxiliary power supply board for the drive circuit is excessively large, the voltage output by the drive circuit also increases synchronously, which easily causes damage to the first switching transistor Q1. Therefore, in an embodiment, as shown in FIG. 6, a second resistor R2 is connected in series between the drive circuit and the base of the first switching transistor.

In this embodiment of this application, the voltage of the drive signal output by the drive circuit is large. If there is no second resistor R2, the first switching transistor Q1 may be damaged. For example, assuming that the voltage output by the drive circuit is 48 V, if there is no second resistor R2, the voltage of 48 V is applied between the base and the emitter of the first switching transistor Q1 and applied to the first resistor R1. Particularly, when a resistance value of the first resistor R1 is small, the voltage applied between the base and the emitter of the first switching transistor Q1 is large, and may be greater than a limit voltage that can be borne between the base and the emitter of the first switching transistor Q1. As a result, the first switching transistor Q1 is damaged.

However, in this embodiment of this application, because the drive circuit is connected to the base of the first switching transistor Q1 through the second resistor R2, the voltage output by the drive circuit=a voltage between two ends of the second resistor R2+the voltage between the base and the emitter of the first switching transistor Q1+the voltage between the two ends of the first resistor R1. Even if the voltage output by the drive circuit is large, the second resistor R2 can bear most of the voltage, to avoid damage to the first switching transistor Q1.

An example in which the turn-on voltage of the first switching transistor Q1 is 3.4 V is still used. If the voltage corresponding to the high-level signal output by the drive circuit is 48 V, and a ratio of a resistance value of the second resistor R2 to the resistance value of the first resistor R1 is 10:1. In this case, if the voltage between the base and the emitter of Q1 is 4 V, the voltage between the two ends of R2 may reach 40 V, and the voltage between the two ends of R1 is 4 V. Because the voltage between the base and the emitter of the first switching transistor Q1 is greater than the turn-on voltage of the first switching transistor Q1, the first switching transistor Q1 is turned on. In addition, because most of the voltage output by the drive circuit is borne by R2, the voltage between the base and the emitter of Q1 is slightly greater than the turn-on voltage of Q1, so that damage to the first switching transistor Q1 can be avoided.

In this embodiment of this application, because one second resistor is connected in series between the drive circuit and the base of the first switching transistor, a part of the voltage corresponding to the high-level signal output by the drive circuit is borne by the second resistor, so that the voltage between the base and the emitter of the first switching transistor can be reduced, thereby avoiding damage to the first switching transistor.

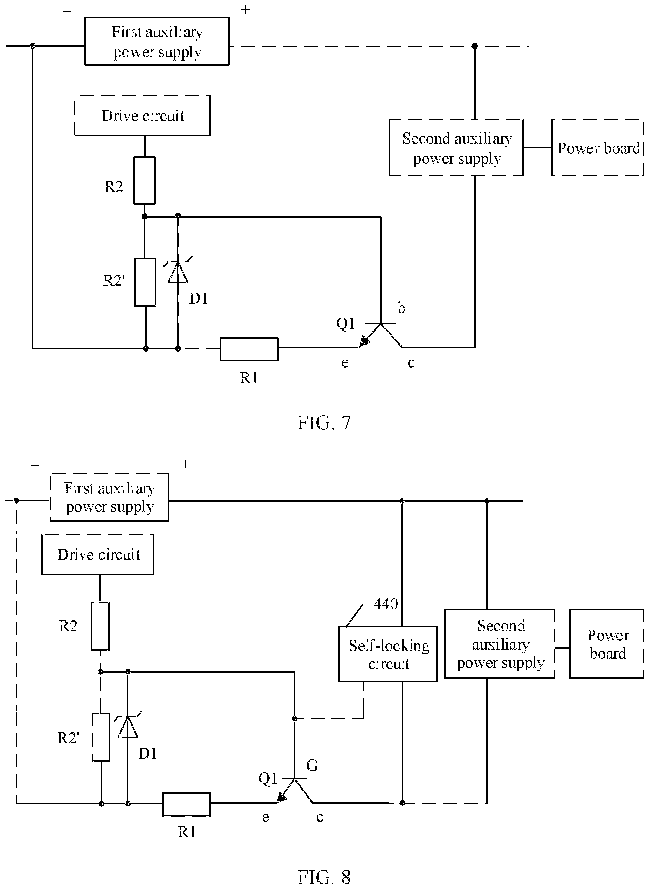

It is noted above that the voltage output by the drive circuit may not be a constant value. In this case, turn-on or turn-off of the first switching transistor Q1 may be affected. Therefore, as shown in FIG. 7, in an embodiment, after the first switching transistor Q1 and the first resistor R1 are connected in series, the first switching transistor Q1 and the first resistor R1 are connected in parallel to two ends of a third resistor R2', and one end of the third resistor R2' is connected to the base of the first switching transistor Q1.

A first Zener diode D1 is further connected in parallel to the two ends of the third resistor R2', and a cathode of the first Zener diode D1 is connected to the base of the first switching transistor Q1.

In this embodiment of this application, functions of R2' and D1 are to stabilize the voltages of Q1 and R1. An example in which the turn-on voltage of the first switching transistor Q1 is 3.4 V is still used. If the voltage corresponding to the high-level signal output by the drive circuit is 48 V, and a ratio of the resistance value of the second resistor R2 to a resistance value of the third resistor R2' to the resistance value of the first resistor R1 is 8:4:3, and a Zener voltage value of D1 is 16 V. In this case, because the voltage corresponding to the high level output by the drive circuit is 48 V, the voltage is sufficient to break through the first Zener diode D1. After D1 is broken through, a voltage between two ends of D1 is stabilized at 16 V. In this case, a sum of the drive voltage of the first switching transistor Q1 and the voltage between the two ends of the first resistor R1 is stabilized at 16 V. If the voltage between the base and the emitter of Q1 is 4 V, the voltage between the two ends of R1 is 12 V. Because the voltage between the base and the emitter of the first switching transistor Q1 is greater than the turn-on voltage of the first switching transistor Q1, the first switching transistor Q1 is turned on. If the voltage value corresponding to the high-level signal output by the drive circuit fluctuates, or a voltage at each point in a circuit changes due to another reason, the voltage between the two ends of D1 is still stabilized at 16 V, which is equivalent to that the voltage between the base and the emitter of Q1 is stabilized at 4 V, so that a turn-on state of Q1 can be stabilized.

In this embodiment of this application, the two ends of the third resistor are connected in parallel to the first Zener diode, and the cathode of the first Zener diode is connected to the drive circuit, which is equivalent to that the cathode of the first Zener diode is connected to the drive circuit. When the voltage corresponding to the high-level signal output by the drive circuit is large, the voltage may break through the first Zener diode. When the first Zener diode is broken through, the voltage between the two ends of the first Zener diode is a stable voltage value, and the stable voltage value is equivalent to the sum of the drive voltage of the first switching transistor and the voltage between the two ends of the first resistor. Even if the voltage value corresponding to the high-level signal output by the drive circuit fluctuates, or the voltage at each point in the circuit changes due to another reason, the voltage between the two ends of the first Zener diode is always a stable voltage value, that is, the sum of the drive voltage of the first switching transistor and the voltage between the two ends of the first resistor is a stable value. Therefore, the voltage between the base and the emitter of the first switching transistor is a stable value, so that the turn-on state of the first switching transistor can be stabilized, and then the first auxiliary power supply may continuously supply power to the second auxiliary power supply in the battery pack.

The foregoing separately describes a case in which the voltage corresponding to the high-level signal output by the drive circuit is large and a case in which the voltage corresponding to the high-level signal output by the drive circuit is small. The signal output by the drive circuit may be a continuous high-level signal, or may be a pulse signal. If the signal output by the drive circuit is a pulse signal, Q1 is periodically turned on and off. This is unfavorable for the first auxiliary power supply to continuously supply power to the second auxiliary power supply in the battery pack.

Therefore, as shown in FIG. 8, in an embodiment, the current-limiting protection circuit further includes a self-locking circuit 440, the self-locking circuit 440 is connected in parallel to the second auxiliary power supply, a first end of the self-locking circuit 440 is connected to the first auxiliary power supply, a second end of the self-locking circuit 440 is connected to the collector of the first switching transistor Q1, and a third end of the self-locking circuit 440 is connected to the base of the first switching transistor.

When the first switching transistor Q1 is turned on, the drive voltage is greater than the turn-on voltage of the first switching transistor Q1.

In this embodiment of this application, when the signal output by the drive circuit is a pulse signal, Q1 is periodically turned on or off. In addition, because the drive circuit outputs the pulse signal, the pulse signal periodically attempts to drive the first switching transistor Q1 to be turned on. After a short-circuit fault is rectified, the first switching transistor Q1 can be automatically turned on without manual intervention, so that self-control of the energy storage system can be improved.

However, when the drive circuit outputs the pulse signal, Q1 is periodically turned on or off. When Q1 is turned off, the loop in which the first auxiliary power supply supplies power to the second auxiliary power supply in the battery pack is disconnected. As a result, the first auxiliary power supply cannot successfully supply power to the second auxiliary power supply. In this case, the self-locking circuit 440 in the current-limiting protection circuit in this embodiment of this application can maintain turn-on of the first switching transistor Q1. To be specific, when the first switching transistor Q1 is turned on, even if the drive signal output by the drive circuit is a low-level signal in a specific time period, the self-locking circuit is configured to control the drive voltage (namely, the voltage between the base and the emitter of Q1) for driving the first switching transistor to be greater than the turn-on voltage of Q1, to maintain the turn-on state of Q1, so that the first auxiliary power supply can continuously supply power to the second auxiliary power supply in the battery pack.

In this embodiment of this application, the second end of the self-locking circuit 440 is connected to the collector of the first switching transistor Q1, and the third end is connected to the base of the first switching transistor Q1. When a switching transistor in the self-locking circuit 440 is turned on, it is equivalent to that the base of the first switching transistor Q1 is connected to a positive electrode of the first auxiliary power supply. Because the emitter of the first switching transistor Q1 is connected to the negative electrode of the first auxiliary power supply, the base voltage of the first switching transistor Q1 is greater than the emitter voltage. In addition, when the voltage value of the first auxiliary power supply is appropriate, the voltage between the base and the emitter of the first switching transistor Q1 is greater than the turn-on voltage of the first switching transistor Q1. In this case, the first switching transistor Q1 is turned on, so that the self-locking circuit 440 achieves an objective of maintaining the turn-on state of the first switching transistor Q1.

In this embodiment of this application, if the drive signal output by the drive circuit is designed as the pulse signal, Q1 is periodically turned on and off. However, the self-locking circuit may maintain the turn-on state of the first switching transistor Q1 when the first switching transistor Q1 is turned on, so that the first auxiliary power supply can continuously supply power to the second auxiliary power supply. If the second auxiliary power supply in the battery pack is short-circuited, the voltage between the two ends of the first resistor R1 increases, and the drive voltage (namely, the voltage between the base and the emitter of Q1) of the first switching transistor Q1 decreases, so that the first switching transistor Q1 is turned off, and the short-circuit current can be cut off, thereby reducing the risk of short-circuit fault spreading.

The following specifically describes a diagram of a possible topology of the self-locking circuit.

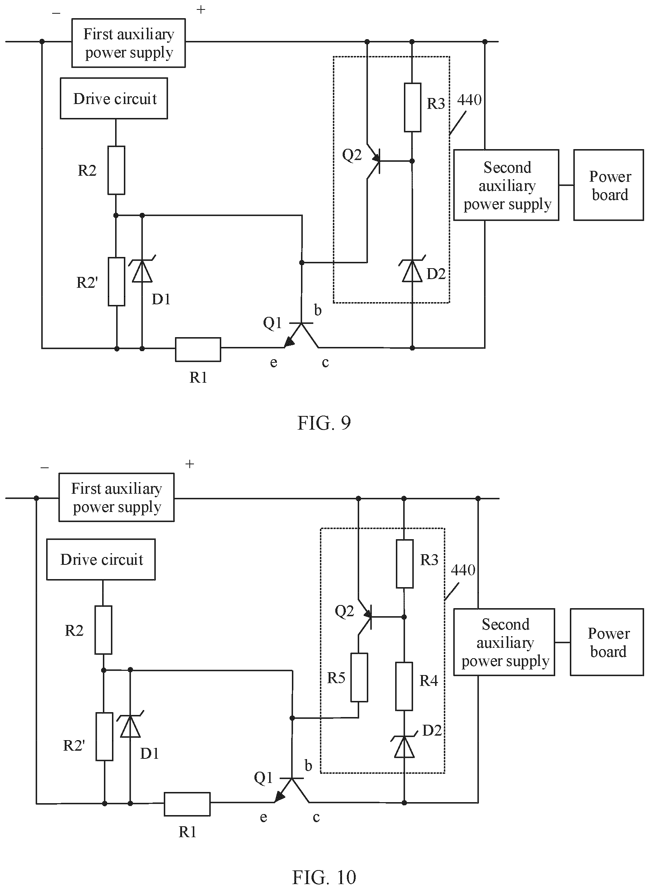

FIG. 9 is a diagram of yet another energy storage system according to an embodiment of this application. The self-locking circuit 440 in this embodiment of this application includes a second Zener diode D2, a fourth resistor R3, and a second switching transistor Q2.

The fourth resistor R3 and the second Zener diode D2 are connected in series and then connected in parallel to the second auxiliary power supply, a cathode of the second Zener diode D2 is connected to the fourth resistor R3, an anode of the second Zener diode D2 is connected to the second auxiliary power supply, an emitter of the second switching transistor Q2 is connected to the first auxiliary power supply, a collector of the second switching transistor Q2 is connected to the base of the first switching transistor Q1, and a base of the second switching transistor Q2 is connected to the cathode of the second Zener diode D2.

In this embodiment of this application, when the first switching transistor Q1 is turned on, the loop in which the first auxiliary power supply supplies power to the second auxiliary power supply in the battery pack is turned on, and the voltage between the two ends of the second auxiliary power supply is equal to a voltage obtained after the resistor R3 is connected in series to the second Zener diode D2. An example in which a voltage output by the first auxiliary power supply is 48 V, and a turn-on voltage of Q2 is 3.4 V is used. When the first auxiliary power supply supplies power to the second auxiliary power supply in the battery pack, it is assumed that the voltage between the two ends of the second auxiliary power supply is 36 V. If a stable voltage of the second Zener diode is 32 V, the 48 V voltage breaks through the second Zener diode D2, so that the voltage of the second Zener diode D2 is stabilized at 32 V. In this case, the voltage between the two ends of R3 is 4 V. Because the two ends of R3 are respectively connected to the base of Q2 and the emitter of Q2, and an emitter voltage of Q2 is greater than a base voltage of Q2, Q2 is turned on. In addition, because the collector of Q2 is connected to the base of Q1, when Q2 is turned on, it is equivalent to that the base of Q1 is connected to the first auxiliary power supply, that is, the base voltage of Q1 is always greater than the emitter voltage of Q1, so that the turn-on state of Q1 can be maintained.

It may be understood that, in this embodiment of this application, because the two ends of R3 are respectively connected to the base and the emitter of Q2, the voltage between the two ends of R3 needs to be not excessively large. In addition, because the second auxiliary power supply is connected in parallel to R3 and D2 that are connected in series, usually, the voltage between the two ends of the second auxiliary power supply is large. As a result, the voltage between the two ends of D2 is large, and selection of the second Zener diode D2 in this embodiment of this application is limited.

To reduce a limitation on selection of the second Zener diode D2, FIG. 10 is a diagram of another energy storage system according to an embodiment of this application.

In an embodiment, the self-locking circuit 440 further includes a fifth resistor R4, the fifth resistor R4 is connected in series between the fourth resistor R3 and the second Zener diode D2, one end of the fifth resistor R4 is connected to the base of the second switching transistor Q2, and the other end of the fifth resistor R4 is connected to the cathode of the second Zener diode D2.

In this embodiment of this application, due to existence of the resistor R4, a limitation on selection of the second Zener diode D2 is reduced. For example, due to existence of the resistor R4, a stable voltage of the second Zener diode D2 in this embodiment of this application may be selected as 16 V. An example in which a voltage output by the first auxiliary power supply is 48 V, and a turn-on voltage of Q2 is 3.4 V is still used. When the first auxiliary power supply supplies power to the second auxiliary power supply in the battery pack, it is assumed that the voltage between the two ends of the second auxiliary power supply is 36 V. The 48 V voltage breaks through D2, so that the voltage of D2 is stabilized at 16 V. In this case, the voltages of R3 and R4 are 20 V. If a resistance value of the fourth resistor R3 is 1Ω, and a resistance value of the fifth resistor R4 is 5Ω, voltages between two ends of R3 and R4 are respectively 4 V and 16 V. Because the voltage between the two ends of R3 is 4 V, to be specific, the voltage between the base and the emitter of Q2 is 4 V, which is greater than the turn-on voltage of Q2, Q2 is turned on. In addition, because the collector of Q2 is connected to the base of Q1, when Q2 is turned on, it is equivalent to that the base of Q1 is connected to the first auxiliary power supply, that is, the base voltage of Q1 is always greater than the emitter voltage of Q1, so that the turn-on state of Q1 can be maintained. In this process, due to existence of R4, under a condition of ensuring that the turn-on state of Q1 is maintained, selection of the second Zener diode D2 may be slightly relaxed, that is, a Zener diode with a small Zener voltage value may be selected.

In an embodiment, the self-locking circuit 440 further includes a sixth resistor R5, one end of the sixth resistor R5 is connected to the collector of the second switching transistor Q2, and the other end of the sixth resistor R5 is connected to the base of the first switching transistor Q1.

Refer to FIG. 10. The sixth resistor R5 in this embodiment of this application may protect Q1. Specifically, when Q2 is turned on, the voltage of the first auxiliary power supply is directly applied between the base and the emitter of Q1, and may exceed a limit voltage between the base and the emitter of Q1. Consequently, this easily causes damage to Q1. When R5 is disposed, R5 may share a part of the voltage, and the voltage between the base and the emitter of Q1 decreases, so that a risk of damage to Q1 can be reduced, and a service life of Q1 can be prolonged.

In an embodiment, the self-locking circuit further includes a capacitor, two ends of the capacitor are respectively connected to the base of the first auxiliary power supply and the base of the second switching transistor, and the capacitor is configured to filter out a clutter of the auxiliary power supply.

In this embodiment of this application, although the auxiliary power supply outputs a direct current, there may be a clutter in the direct current, and the capacitor may filter out the clutter of the auxiliary power supply, so that a current input to the battery pack is a direct current, thereby reducing interference of the clutter.

As described above, when the second auxiliary power supply in the battery pack is short-circuited, the short-circuit current in the loop may be disconnected by turning off Q1. However, this is applicable to a case in which a strong short circuit occurs in the second auxiliary power supply, that is, the short-circuit current is quite large, so that the voltage between the two ends of the first resistor R1 continuously increases, until the voltage between the base and the emitter of Q1 is less than the turn-on voltage of Q1. When a weak short circuit occurs on the second auxiliary power supply in the battery pack, the voltage between the two ends of R1 may increase slightly, and the voltage between the base and the emitter of Q1 is always greater than the turn-on voltage of Q1 . As a result, the short-circuit current in the loop cannot be disconnected. Based on this, the current-limiting protection circuit in this embodiment of this application may further include a temperature detection circuit, and Q1 is turned off through the temperature detection circuit. For details, refer to descriptions below.

It should be noted that "strong short circuit" and "weak short circuit" in this embodiment of this application are two relative concepts. "Strong short circuit" may be understood as that a short-circuit current is quite large. In this case, the voltage between the two ends of the first resistor R1 is large. As a result, the drive voltage of Q1 is less than the turn-on voltage of Q1, and Q1 is turned off. "Weak short circuit" may be understood as that a short-circuit current is small. Although the voltage between the two ends of the first resistor R1 increases, an increased amplitude is insufficient to enable the drive voltage of Q1 to be less than the turn-on voltage of the first resistor R1, that is, the transistor Q1 is still in the turn-on state. In this case, for details on how to turn off Q1, refer to descriptions below.

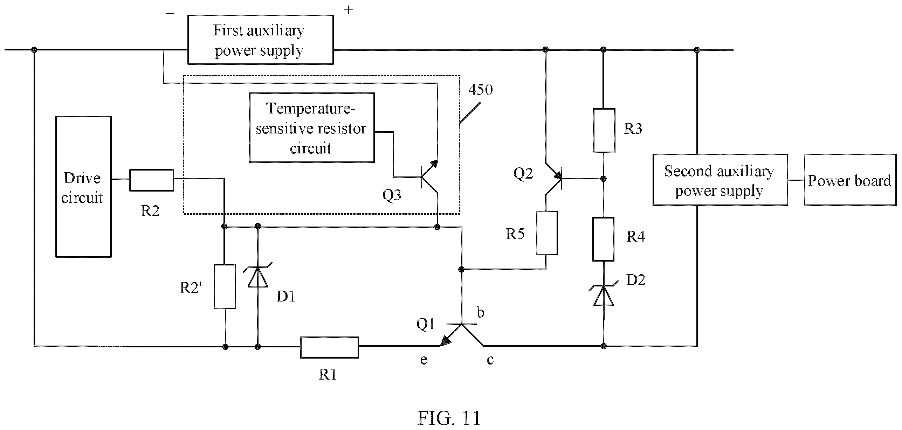

In an embodiment, as shown in FIG. 11, the current-limiting protection circuit further includes a temperature detection circuit 450, the temperature detection circuit 450 includes a temperature-sensitive resistor circuit and a third switching transistor Q3, a base of the third switching transistor Q3 is connected to the temperature-sensitive resistor circuit, an emitter of the third switching transistor Q3 is connected in series to the emitter of the first switching transistor Q1, and a collector of the third switching transistor Q3 is connected to the base of the first switching transistor Q1.

When a temperature of the first switching transistor Q1 is greater than a temperature threshold, the third switching transistor Q3 is turned on, and the first switching transistor Q1 is turned off.

In this embodiment of this application, a voltage source of the temperature-sensitive resistor circuit may be a specific voltage source, and the voltage source may be an auxiliary power supply other than the first auxiliary power supply on the BCU-auxiliary power supply board.

In this embodiment of this application, in a normal case, the first switching transistor Q1 is turned on, the loop in which the first auxiliary power supply supplies power to the second auxiliary power supply in the battery pack is turned on, and the first auxiliary power supply successfully supplies power to the second auxiliary power supply in the battery pack. If a weak short circuit occurs on the second auxiliary power supply, that is, the short-circuit current in the loop in which the first auxiliary power supply supplies power to the second auxiliary power supply is small, although the voltage between the two ends of R1 increases, an increased amplitude of the voltage is insufficient to enable the voltage between the base and the emitter of Q1 to be less than the turn-on voltage of Q1. However, because there is the short-circuit current in the loop, the temperature of Q1 increases. The temperature detection circuit 450 detects that the temperature of Q1 exceeds the temperature threshold, and the temperature detection circuit 450 may turn on the third switching transistor Q3. Because the emitter of Q3 is connected to the negative electrode of the first auxiliary power supply, it is equivalent to that the base of Q1 is connected to the negative electrode of the first auxiliary power supply. In addition, because the emitter of Q1 is also connected to the negative electrode of the first auxiliary power supply, the base voltage of Q1 is consistent with the emitter voltage of Q1, so that Q1 can be turned off.

A setting of the temperature threshold in this embodiment of this application is related to a type of the switching transistor. Temperature thresholds of different types of switching transistors may be the same or may be different.

In this embodiment of this application, when the temperature of the first switching transistor is greater than the temperature threshold, the temperature detection circuit may turn on the third switching transistor, to enable the first switching transistor to be turned off, so that damage to the first switching transistor caused by an excessively high temperature can be avoided, thereby protecting the first switching transistor, and prolonging a service life of the first switching transistor.

It may be understood that, although it is noted above that the temperature detection circuit is used to protect the first switching transistor against the weak short circuit occurred on the second auxiliary power supply in the battery pack, during actual application, the temperature detection circuit can still protect the first switching transistor against a strong short circuit occurred on the battery pack. Therefore, the temperature detection circuit provided in this embodiment of this application can adapt to various short-circuit scenarios. To be specific, for various short-circuit cases of the second auxiliary power supply in the battery pack, the temperature detection circuit can protect the first switching transistor.

The following specifically describes a diagram of a possible topology of the temperature-sensitive resistor circuit.

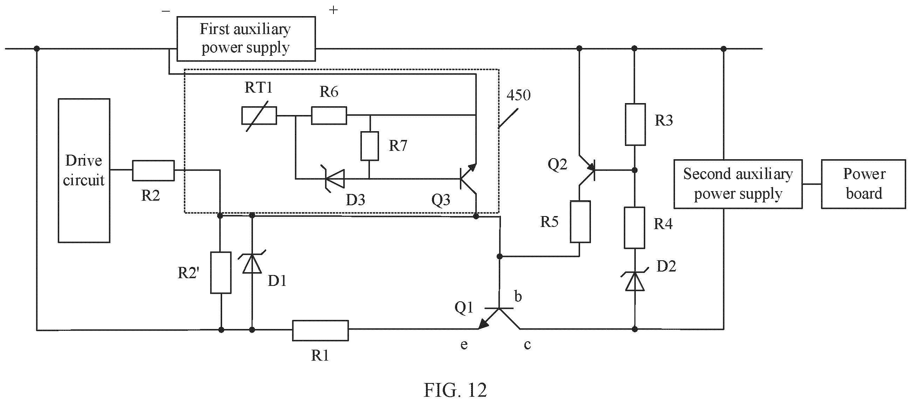

In an embodiment, as shown in FIG. 12, the temperature-sensitive resistor circuit 450 includes a temperature-sensitive resistor, a seventh resistor, an eighth resistor, and a third Zener diode, and a resistance value of the temperature-sensitive resistor decreases as the temperature of the first switching transistor increases. The temperature-sensitive resistor and the seventh resistor are connected in series and then connected to the emitter of the third switching transistor Q3, the third Zener diode and the eighth resistor are connected in series and then connected in parallel to two ends of the seventh resistor, and a connection point between the third Zener diode and the seventh resistor is connected to the base of the third switching transistor.

Refer to FIG. 12. In this embodiment of this application, the temperature-sensitive resistor is RT1, the seventh resistor is R6, the eighth resistor is R7, and the third Zener diode is D3, and a resistance value of the temperature-sensitive resistor RT1 decreases as the temperature increases.

Specifically, if the second auxiliary power supply in the battery pack is short-circuited, there is the short-circuit current in the loop. The short-circuit current flows through the first switching transistor Q1, causing the temperature of the first switching transistor Q1 to increase, and the resistance value of the temperature-sensitive resistor RT1 decreases, causing a voltage between two ends of RT1 to decrease. As a result, a voltage between the two ends of the seventh resistor R6 increases. After the third Zener diode D3 and the resistor R7 are connected in series, the third Zener diode D3 and the resistor R7 are connected in parallel to the two ends of the resistor R6. Therefore, the voltage between the two ends of the resistor R6 is voltage obtained after the third Zener diode D3 and the resistor R7 are connected in series. An increase in the voltage between the two ends of the resistor R6 is equivalent to an increase in the voltage obtained after the third Zener diode D3 and the resistor R7 are connected in series. When the voltage between the two ends of the resistor R6 increases to a specific value, the third Zener diode D3 may be broken through. After the third Zener diode D3 is broken through, the voltage between the two ends of the third Zener diode D3 is a stable voltage value, for example, is stabilized at 4 V. Because an anode of the third Zener diode D3 is connected to the base of the third switching transistor Q3, a base voltage of the third switching transistor Q3 is 4 V, which is greater than an emitter voltage of the third switching transistor Q3, and the third switching transistor Q3 is turned on. When the third switching transistor Q3 is turned on, because the emitter of the third switching transistor Q3 is connected to the negative electrode of the first auxiliary power supply and the collector of the third switching transistor Q3 is connected to the base of the first switching transistor Q1, it is equivalent to that the base of the first switching transistor Q1 is connected to the negative electrode of the first auxiliary power supply. In addition, because the emitter of Q1 is also connected to the negative electrode of the first auxiliary power supply, the base voltage of the first switching transistor Q1 is consistent with the emitter voltage of the first switching transistor Q1, so that the first switching transistor Q1 can be turned off, to protect the first switching transistor Q1.

It should be noted that, in the foregoing embodiments, an example in which the drive circuit and a main circuit (where the main circuit may be understood as a circuit in which the first auxiliary power supply supplies power to the second auxiliary power supply in the battery pack) share the negative electrode is used. In some embodiments, the drive circuit and the main circuit may alternatively not share the negative electrode, that is, the drive circuit is isolated from the main circuit.

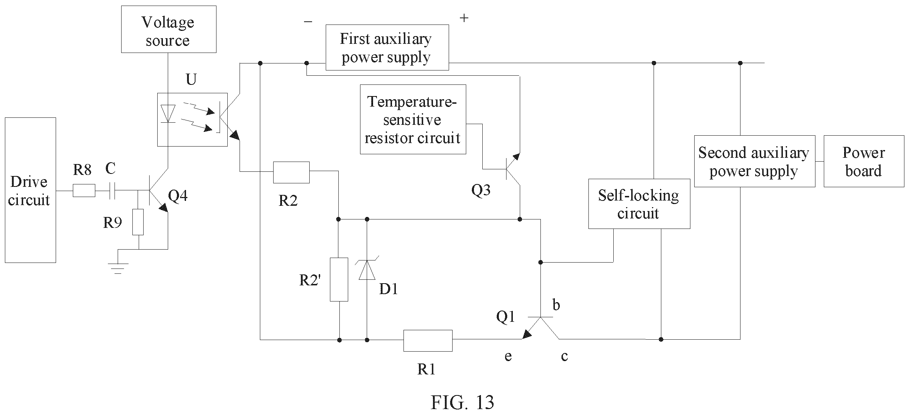

FIG. 13 is a diagram of yet another energy storage system according to an embodiment of this application. When the drive circuit outputs a pulse signal, the capacitor C can transmit the pulse signal due to a direct current blocking and alternating current characteristic of the capacitor C. The drive circuit is connected to the base of the switching transistor Q4, and the emitter of the switching transistor Q4 is grounded. Therefore, when the drive circuit outputs the high-level signal, the switching transistor Q4 is turned on, so that the voltage source is turned on by using a primary side of an optical coupler U and a circuit of the switching transistor Q4. Therefore, the voltage output by the voltage source acts on the primary side of the optical coupler U (that is, on a light-emitting diode of the optical coupler U shown in the figure), so that the light-emitting diode emits light. The light-emitting diode may enable a secondary side of the optical coupler U (namely, a switching transistor of the optical coupler U shown in the figure) to be turned on, so that the first auxiliary power supply forms a loop through the secondary side of the optical coupler U, R2, Q1, and R1, and Q1 is turned on. In addition, the resistor R9 shown in FIG. 13 is configured to protect the switching transistor Q4. Because one end of the resistor R9 is connected to the base of the switching transistor Q4, and the other end of the resistor R9 is connected to the emitter of the switching transistor Q4, a voltage between the base and the emitter of the switching transistor Q4 is the voltage between the two ends of the resistor R9, to avoid damage to the switching transistor Q4 caused by an excessively large voltage between the base and the emitter of the switching transistor Q4.

It can be learned from FIG. 13 that the voltage source is grounded through the switching transistor Q4, and the first auxiliary power supply is connected to the negative electrode of the first auxiliary power supply V1 through the second auxiliary power supply in the battery pack, the first switching transistor Q1, and the first resistor R1. The two voltage sources are not grounded together. In other words, the voltage source is isolated from the circuit in which the first auxiliary power supply supplies power to the second auxiliary power supply in the battery pack.

In addition, this application further provides a photovoltaic energy storage system. The photovoltaic energy storage system includes a power converter and the energy storage system according to any one of the foregoing embodiments, a direct current input end of the power converter is configured to be connected to a photovoltaic module, an alternating current output end of the power converter is configured to be connected to a load, the power converter includes a direct current conversion circuit and an inverter circuit that are connected in series, and a series connection point between the direct current conversion circuit and the inverter circuit is connected to the first auxiliary power supply of the energy storage system.

For the photovoltaic energy storage system in this embodiment of this application, refer to FIG. 1. As described above, the photovoltaic module converts solar energy into a direct current through a photovoltaic effect. A power conversion system converts the direct current into an alternating current, and then sends the alternating current to a power grid. Alternatively, a power conversion system may convert a direct current from the energy storage system into an alternating current, and then send the alternating current to a power grid. The power converter in this embodiment of this application may be the power conversion system in FIG. 1. The energy storage system includes a BCU and a battery pack, the energy storage system is connected to a direct current bus in the power conversion system, and the BCU in the energy storage system may obtain power from the direct current bus in the power conversion system, and process a direct current to output different voltages. For example, a voltage of 48 V obtained after the processing may be used to supply power to a second auxiliary power supply in the battery pack.

It should be noted that this application may be applied to any scenario including a power supply and a load. For example, this application further provides an inverter system. The inverter system includes a power converter and a backup power box. The power converter is configured to convert a direct current from a direct current source into an alternating current, and transmits the alternating current to the backup power box. A first auxiliary power supply in the power converter is configured to supply power to the second auxiliary power supply in the backup power box. After the second auxiliary power supply and a current-limiting protection circuit are connected in series, the second auxiliary power supply and the current-limiting protection circuit are connected in parallel to two ends of the first auxiliary power supply. The current-limiting protection circuit includes a drive circuit, a first switching transistor, and a first resistor, one end of the first switching transistor and the first resistor that are connected in series is connected to the first auxiliary power supply, the other end of the first switching transistor and the first resistor that are connected in series is connected to the second auxiliary power supply, and the drive circuit is connected to the first auxiliary power supply through the first switching transistor and the first resistor; and when a drive voltage is greater than a turn-on voltage of the first switching transistor, the first switching transistor is turned on, and the drive voltage is a difference between an output voltage of the drive circuit and a voltage between two ends of the first resistor.

In this embodiment of this application, the first auxiliary power supply in the power converter is equivalent to the first auxiliary power supply in the foregoing embodiments, the backup power box is equivalent to the battery pack in the foregoing embodiments, and the second auxiliary power supply in the backup power box is equivalent to the second auxiliary power supply in the battery pack. A specific circuit connection relationship and a protection process are similar to those in the foregoing embodiments. Details are not described again.

For another example, this application further provides an electric vehicle. The electric vehicle may include an auxiliary power supply and a battery pack, and the auxiliary power supply is configured to supply power to the auxiliary power supply in the battery pack. After the auxiliary power supply in the battery pack and a current-limiting protection circuit are connected in series, the auxiliary power supply and the current-limiting protection circuit are connected in parallel to two ends of the auxiliary power supply. The current-limiting protection circuit includes a drive circuit, a first switching transistor, and a first resistor, one end of the first switching transistor and the first resistor that are connected in series is connected to the auxiliary power supply, the other end of the first switching transistor and the first resistor that are connected in series is connected to the auxiliary power supply in the battery pack, and the drive circuit is connected to the auxiliary power supply through the first switching transistor and the first resistor; and when a drive voltage is greater than a turn-on voltage of the first switching transistor, the first switching transistor is turned on, and the drive voltage is a difference between an output voltage of the drive circuit and a voltage between two ends of the first resistor.

The auxiliary power supply in this embodiment of this application is equivalent to the first auxiliary power supply in the foregoing embodiments, and the auxiliary power supply in the battery pack is equivalent to the second auxiliary power supply in the foregoing embodiments. A specific circuit connection relationship and a protection process are similar to those in the foregoing embodiments. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, comprising a first auxiliary power supply, a battery pack, and a current-limiting protection circuit, wherein the first auxiliary power supply is configured to supply power to a second auxiliary power supply in the battery pack; the second auxiliary power supply is configured to supply power to a power board in the battery pack; the power board is configured to monitor a battery cell in the battery pack, or the power board is configured to change a charging voltage and a discharging voltage of a battery cell, or the power board is configured to collect a charging voltage and a discharging voltage of a battery cell; and the second auxiliary power supply and the current-limiting protection circuit are connected in series and then connected in parallel to two ends of the first auxiliary power supply; and
the current-limiting protection circuit comprises a drive circuit, a first switching transistor, and a first resistor, one end of the first switching transistor and the first resistor that are connected in series is connected to the first auxiliary power supply, the other end of the first switching transistor and the first resistor that are connected in series is connected to the second auxiliary power supply, and the drive circuit is connected to the first auxiliary power supply through the first switching transistor and the first resistor; and when a drive voltage is greater than a turn-on voltage of the first switching transistor, the first switching transistor is turned on, and the drive voltage is a difference between an output voltage of the drive circuit and a voltage between two ends of the first resistor.

2. The energy storage system according to claim 1, wherein a base of the first switching transistor is connected to the drive circuit, an emitter of the first switching transistor is connected to the first resistor, and a collector of the first switching transistor is connected to the second auxiliary power supply.

3. The energy storage system according to claim 2, wherein a second resistor is connected in series between the drive circuit and the base of the first switching transistor.

4. The energy storage system according to claim 3, wherein after the first switching transistor and the first resistor are connected in series, the first switching transistor and the first resistor are connected in parallel to two ends of a third resistor, and one end of the third resistor is connected to the base of the first switching transistor; and
a first Zener diode is further connected in parallel to the two ends of the third resistor, and a cathode of the first Zener diode is connected to the base of the first switching transistor.

5. The energy storage system according to any one of claims 1 to 4, wherein the current-limiting protection circuit further comprises a self-locking circuit, the self-locking circuit is connected in parallel to the second auxiliary power supply, a first end of the self-locking circuit is connected to the first auxiliary power supply, a second end of the self-locking circuit is connected to the collector of the first switching transistor, and a third end of the self-locking circuit is connected to the base of the first switching transistor; and
when the first switching transistor is turned on, the drive voltage is greater than the turn-on voltage of the first switching transistor.

6. The energy storage system according to claim 5, wherein the self-locking circuit comprises a second Zener diode, a fourth resistor, and a second switching transistor; and
the fourth resistor and the second Zener diode are connected in series and then connected in parallel to the second auxiliary power supply, a cathode of the second Zener diode is connected to the fourth resistor, an anode of the second Zener diode is connected to the second auxiliary power supply, an emitter of the second switching transistor is connected to the first auxiliary power supply, a collector of the second switching transistor is connected to the base of the first switching transistor, and a base of the second switching transistor is connected to the cathode of the second Zener diode.

7. The energy storage system according to claim 6, wherein the self-locking circuit further comprises a fifth resistor, the fifth resistor is connected in series between the fourth resistor and the second Zener diode, one end of the fifth resistor is connected to the base of the second switching transistor, and the other end of the fifth resistor is connected to the cathode of the second Zener diode.

8. The energy storage system according to claim 6 or 7, wherein the self-locking circuit further comprises a sixth resistor, one end of the sixth resistor is connected to the collector of the second switching transistor, and the other end of the sixth resistor is connected to the base of the first switching transistor.

9. The energy storage system according to any one of claims 1 to 8, wherein the current-limiting protection circuit further comprises a temperature detection circuit, the temperature detection circuit comprises a temperature-sensitive resistor circuit and a third switching transistor, a base of the third switching transistor is connected to the temperature-sensitive resistor circuit, an emitter of the third switching transistor is connected in series to the emitter of the first switching transistor, and a collector of the third switching transistor is connected to the base of the first switching transistor; and
when a temperature of the first switching transistor is greater than a temperature threshold, the third switching transistor is turned on, and the first switching transistor is turned off.

10. The energy storage system according to claim 9, wherein the temperature-sensitive resistor circuit comprises a temperature-sensitive resistor, a seventh resistor, an eighth resistor, and a third Zener diode, and a resistance value of the temperature-sensitive resistor decreases as the temperature of the first switching transistor increases; and
the temperature-sensitive resistor and the seventh resistor are connected in series and then connected to the emitter of the third switching transistor, the third Zener diode and the eighth resistor are connected in series and then connected in parallel to two ends of the seventh resistor, and a connection point between the third Zener diode and the eighth resistor is connected to the base of the third switching transistor.

11. The energy storage system according to any one of claims 6 to 8, wherein the self-locking circuit further comprises a capacitor, the capacitor is connected in parallel to two ends of the fourth resistor, and the capacitor is configured to filter out a clutter of the first auxiliary power supply.

12. A photovoltaic energy storage system, wherein the photovoltaic energy storage system comprises a power converter and the energy storage system according to any one of claims 1 to 11, a direct current input end of the power converter is configured to be connected to a photovoltaic module, an alternating current output end of the power converter is configured to be connected to a load, the power converter comprises a direct current conversion circuit and an inverter circuit that are connected in series, and a series connection point between the direct current conversion circuit and the inverter circuit is connected to the first auxiliary power supply of the energy storage system.
